# EUROPÄISCHE PATENTSCHRIFT

(11) **EP 0 979 789 B1**
(45) Veröffentlichungstag und Bekanntmachung des Hinweises auf die Patenterteilung: **30.10.2002**
(21) Anmeldenummer: 99250254.2
(22) Anmeldetag: 29.07.1999
(51) Int. Cl.: B65G 47/88

(54) **Vorrichtung zum Vereinzeln und zur Weitergabe von Stabmaterial, insbesondere von Rohren und Stangen**
Device for separating and transfering bar material, particularly tubes and rods
Dispositif pour séparer et transférer du matériau en barre, notamment tubes et tiges

(30) Priorität: 11.08.1998 DE 19837477
(43) Veröffentlichungstag der Anmeldung: 16.02.2000
(73) Patentinhaber: V & M Deutschland GmbH, 40472 Düsseldorf (DE)
(72) Erfinder: Klemme, Wolfgang, 47053 Duisburg (DE)
(74) Vertreter: Meissner, Peter E., Dipl.-Ing.

(56) Entgegenhaltungen:
- NL-A- 7 200 286
- US-A- 2 024 513
- US-A- 3 306 472

## Beschreibung

Die Erfindung betrifft eine Vorrichtung zum Vereinzeln und zur Weitergabe von Stabmaterial, insbesondere von Rohren und Stangen gemäß dem Oberbegriff des Hauptanspruches. Eine solche Vorrichtung ist aus der NL-A-7 200 286 bekannt.

Eine andere Vorrichtung ist aus der DE 32 45 980 C2 bekannt. Diese besteht aus einer Mulde zur paketweisen Aufnahme von Stäben und einem an der Aufgabeflanke der Mulde auf- und abbewegbaren Hubförderer für die einzeln auf Förderbahnen in Übergabeposition hochschiebbaren Stäben. Der Hubförderer weist in Muldenlängsrichtung mehrere in vorgegebenen Abständen fluchtend angeordnete und auf einer gemeinsamen Schwenkachse hochschwenkbare gelagerte Hubhebel auf. Die Hubhebel bilden mit ihren der Mulde zugewandten bogenförmigen Rücken eine Anlagefläche für die dort befindlichen Stäbe. Die Hubhebel sind als scheibenartige Kreissegmente ausgebildet, welche am oberen und unteren Ende des kreisbogenförmigen Rückens Rollen sowie den Rollenzwischenraum überbrückende Gleitbahnen aufweisen. Über die Rollen und die gebogenen Gleitbahnen sind endlose Riemen geführt, die die Anlagefläche für die Stäbe bilden. Zur Ausförderung der Stäbe aus der Mulde weist der Hubförderer eine durchlaufende, von allen Hubhebeln getragene Förderleiste auf.

Die vorgeschlagene Konstruktion ist zwar gut geeignet für eine schonende und geräuschfreie Behandlung von Stäben, aber konstruktiv sehr aufwendig, da der endlose Riemen eine gute Führung und eine Nachspannmöglichkeit erfordert. Die Förderleiste kann in einem gewissen Umfang an unterschiedliche Durchmesser der Stäbe angepaßt werden, sie muß dazu aber ausgewechselt werden.

Zur Lösung des letztgenannten Problems wird entsprechend der DE-OS-19 01 559 eine Schnell-Verstelleinrichtung vorgeschlagen, mit deren Hilfe die Öffnungsbreite eines Greifers in einfacher Weise verändert werden kann. Die Greifer bestehen jeweils aus zwei nebeneinander liegenden gegeneinander verdrehbaren Platten, von denen die eine Platte einen kreissegmentförmigen und die andere einen kreissektorartigen Querschnitt aufweisen. Über an der kreissektorförmigen Platte angeordnete Zahnräder und einer durch alle Platten sich erstreckende Verstellwelle, die ebenfalls mit den erstgenannten Zahnrädern kämmende Zahnräder aufweist, kann der Öffnungswinkel der Greiferplatten verändert werden. Auch diese Konstruktion ist sehr aufwendig und außerdem nicht geeignet für einen rauhen Walzwerksbetrieb, da die empfindlichen Zahnräderbereiche infolge des Schmutzanfalls störanfällig sind.

Aufgabe der Erfindung ist es, eine gattungsmäßige Vorrichtung zum Vereinzeln und zur Weitergabe von Stabmaterial, insbesondere von Rohren und Stangen anzugeben, die in konstruktiv einfacher Weise für einen rauhen Walzwerksbetrieb geeignet ist und mit der ohne Umbau Stäbe, vorzugsweise Rohre oder Stangen mit stark unterschiedlichen Durchmessern problemlos fortbewegt werden können.

Diese Aufgabe wird ausgehend vom Oberbegriff in Verbindung mit den kennzeichnenden Merkmalen des Patentanspruches 1 gelöst. Vorteilhafte Weiterbildungen sind Bestandteile von Unteransprüchen.

Im Unterschied zum bekannten Stand der Technik (NL-A-7 200 286) sind statt eines Anschlagelementes zwei prismenartig zueinander geneigte gerade Führungsbahnen vorgesehen, an die sich die Zulauf- und die Ablaufschräge anschließen. Der scheibenartige Hubhebel weist auf dem mit den Stäben in Kontakt tretenden Umfangsbereich einen konkav gekrümmten Ablaufabschnitt auf. Der Greifabschnitt mit spitz zulaüfenden Endbereich geht dann über in den schon bekannten konvex gebogenen Rückenabschnitt, der als Anschlagfläche für die Stäbe dient. Vorzugsweise ist dieser Bogenbereich ein Kreisbogen in bezug auf die Schwenkachse des Hubhebels. Damit wird erreicht, daß beim Auf- und Abbewegen des Hubhebels die Stäbe nicht gegen die Lage zurückgedrückt werden. Damit der Hubhebel geschwenkt werden kann, ist ein Schwenkhebel fest mit dem scheibenförmigen Hubhebel verbunden und das freie Ende des Schwenkhebels beispielsweise an einer Kolben-Zylindereinheit angelenkt. Befindet sich der Hubhebel in Endstellung der Weitergabeposition bzw. Stopstellung, dann geht im Querschnitt gesehen der Ablaufabschnitt kontinuierlich annähernd in die Ablaufschräge über, während in der Vereinzelungsposition der spitz zulaufende Endbereich des Greifabschnittes in Fortbewegungsrichtung gesehen vor der Schwerpunktachse des jeweils zu bewegenden Stabes und unterhalb des muldenartigen Elementes liegt. Damit wird sichergestellt, daß unabhängig vom Durchmesser des zu bewegenden Stabes der Angriffspunkt des Greifabschnittes außerhalb der Schwerpunktachse liegt.

Die Vereinzelung und Weitergabe der Stäbe erfolgt nun in der Weise, daß in der Ausgangsstellung die Stäbe am bogenförmigen Rückenabschnitt des Hubhebels anliegen. Wird nun die Kolben-Zylindereinheit betätigt, dann schwenkt der Hubhebel im Uhrzeigersinn, bis die Spitze des Greiferabschnittes unterhalb der Kante des muldenförmigen Elementes liegt. Dann kann der am nächsten liegende Stab bis zum tiefsten Punkt des muldenartigen Elementes rollen bzw. rutschen. Beim Zurückfahren der Kolben-Zylindereinheit schwenkt der Hubhebel entgegen dem Uhrzeigersinn, wobei ein einzelner Stab aus dem muldenartigen Element hochgeschoben wird, bis er die Kante der Ablaufschräge erreicht hat. Durch weiteres Schwenken des Hubhebels wird der Stab kräftemäßig in Richtung Ablaufschräge beaufschlagt. Am Ende der Ablaufschräge übernehmen übliche Quertransportketten den Weitertransport zur nächsten Bearbeitungsstation.

Zur Anordnung der genannten Teile insbesondere des Hubhebels und der Kolben-Zylindereinheit ist ein hochkantstehendes Halteblech vorgesehen, an dem schwenkbar mittels eines Drehzapfens der Hubhebel befestigt ist. Auf der oberen Schmalseite des Haltebleches sind die Führungsbahnen befestigt. Damit beim Abrollen und Weitergabe der Stäbe die Geräusche insbesondere von Stabmaterial aus Stahl gedämpft werden, sind diese Führungsbahnen vorzugsweise aus einem schalldämmenden Werkstoff gefertigt.

Der Vorteil der vorgeschlagenen Konstruktion ist darin zu sehen, daß der Hubhebel einfach aufgebaut und unempfindlich gegen im rauhen Walzwerksbetrieb unvermeidlich auftretende störartige Belastungen ist. Außerdem deckt er einen großen Durchmesserbereich z.B. von 38 bis 220 mm ab, so daß innerhalb dieses Bereiches kein Umbau oder Verstellung erforderlich ist.

In der Zeichnung wird anhand eines Ausführungsbeispieles die erfindungsgemäße Vorrichtung näher erläutert. Es zeigen:
- Figur 1 - 6: in einer Längsansicht die wesentlichen Positionen einer erfindungsgemäß ausgebildeten Vorrichtung
- Figur 7: in einer Längsansicht eine Darstellung des Abmessungsbereiches der zu bewegenden Stäbe

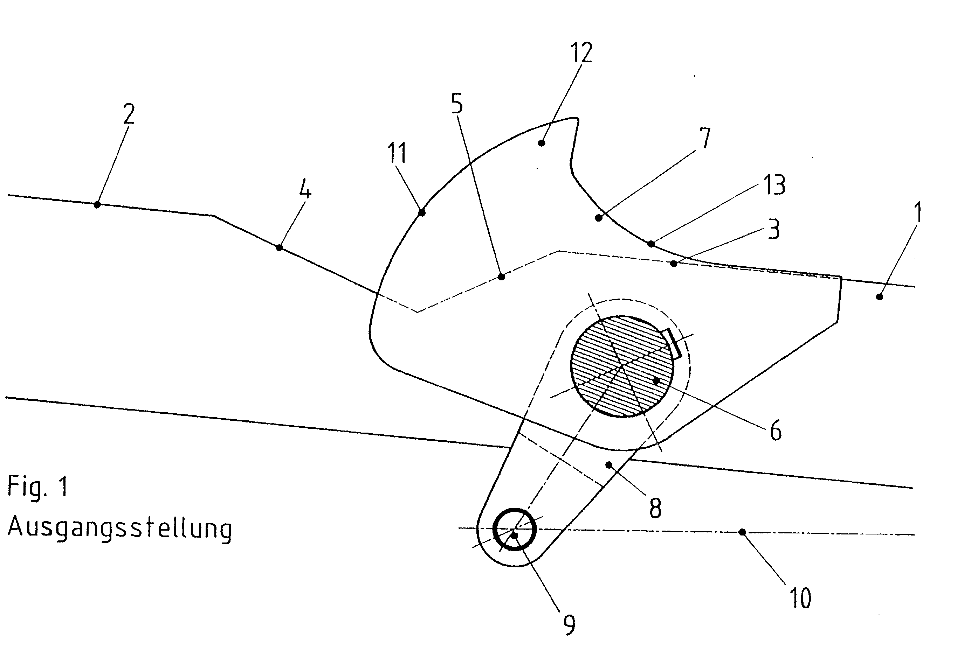

In den Figuren 1 - 6 sind in einer Längsansicht die wesentlichen Positionen einer erfindungsgemäß ausgebildeten Vorrichtung dargestellt. Diese besteht aus einem hochkantstehenden Halteblech 1, auf dessen obenliegender Schmalseite die Anordnung einer Zulaufschräge 2 und einer Ablaufschräge 3 vorgesehen sind. Dazwischen befindet sich ein prismenartig ausgebildetes muldenartiges Element mit zwei zueinander schrägverlaufenden Führungsbahnen 4, 5. Am Halteblech 1 ist über einen Drehzapfen 6 ein scheibenartig ausgebildeter Hubhebel 7 schwenkbar befestigt. Um den Hubhebel 7 verschwenken zu können, ist im unteren Bereich ein Schwenkhebel 8 befestigt, der am freien Ende mit einem Gelenkauge versehen ist. An dieses Gelenkauge 9 ist vorzugsweise eine hier nicht dargestellte Kolben-Zylindereinheit angeordnet. Die Mittelachse 10 dieser Kolben-Zylindereinheit ist hier angedeutet.

Der Hubhebel 7 weist einen den zu rollenden Stäben zugewandten konvex gekrümmten Rücken 11 und daran anschließend einen nach oben spitz zulaufenden Greifabschnitt 12 auf. Dieser geht dann über in einen konkav gekrümmten Ablaufabschnitt 13, der asymptotisch in der hier dargestellten Ausgangsstellung in die Ablaufschräge 3 übergeht.

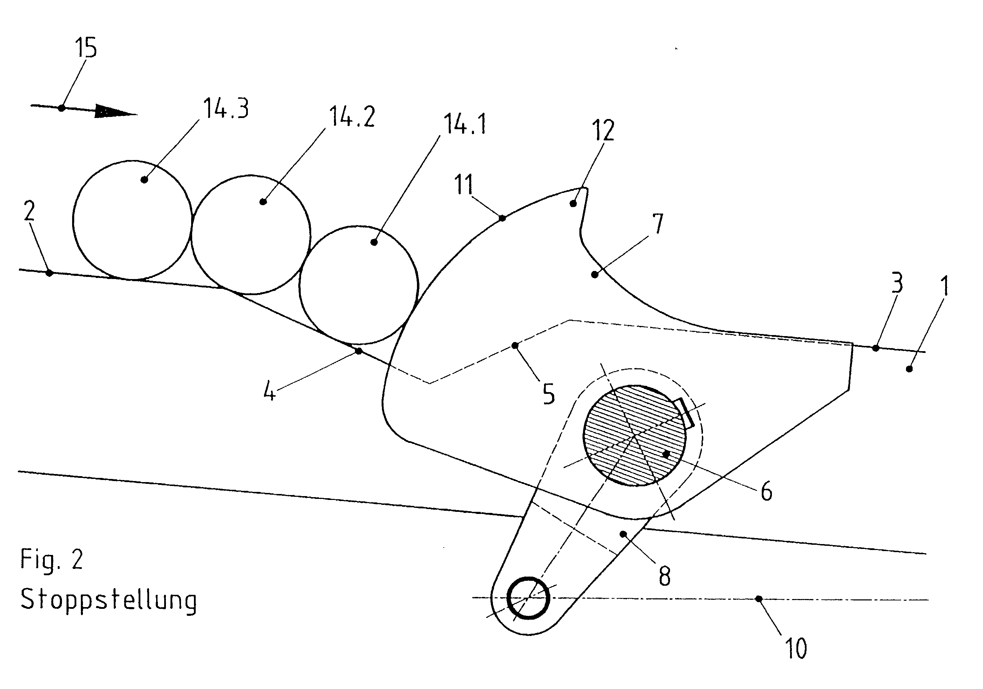

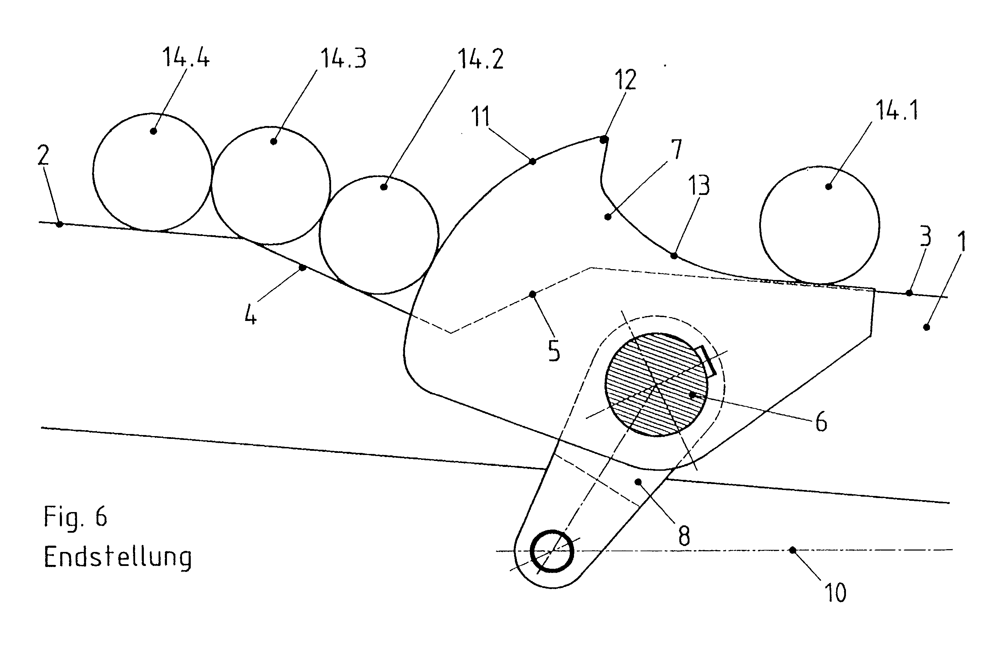

Figur 2 zeigt die Stopstellung der Vorrichtung, wobei diese identisch ist mit der Ausgangsstellung gemäß Figur 1 und der Endstellung der Weitergabe gemäß Figur 6. In dieser Darstellung ist gut zu erkennen, wie die von links zugeführten Stäbe 14.1 - 14.3 oder Rohre am konvex gekrümmten Rücken 11 des Hubhebels 7 zur Anlage kommen. Der dick ausgezogene Pfeil 15 gibt die Transportrichtung an.

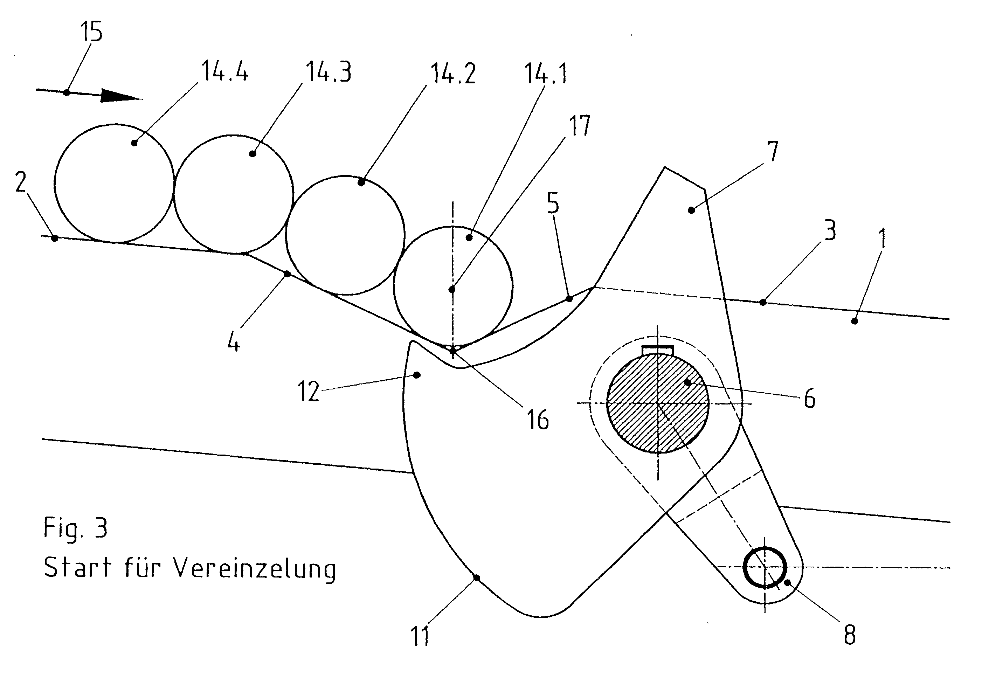

In Figur 3 ist durch Betätigen der hier nicht dargestellten Kolben-Zylindereinheit der Hubhebel 7 mittels des Schwenkhebels 8 in die Position "Start für Vereinzelung" geschwenkt worden. Durch dieses Schwenken des Hubhebels 7 wird für den ersten am Rücken 11 anliegenden Stab 14.1 der Weg freigemacht, um entlang der abfallenden Führungsbahn 4 zur tiefsten Stelle 16 des prismenartig ausgebildeten Elementes zu rutschen oder zu rollen. In dieser Position befindet sich der Greifabschnitt 12 unterhalb der tiefsten Stelle 16 und außerhalb der Schwerpunktachse 17 des zu bewegenden ersten Stabes 14.1.

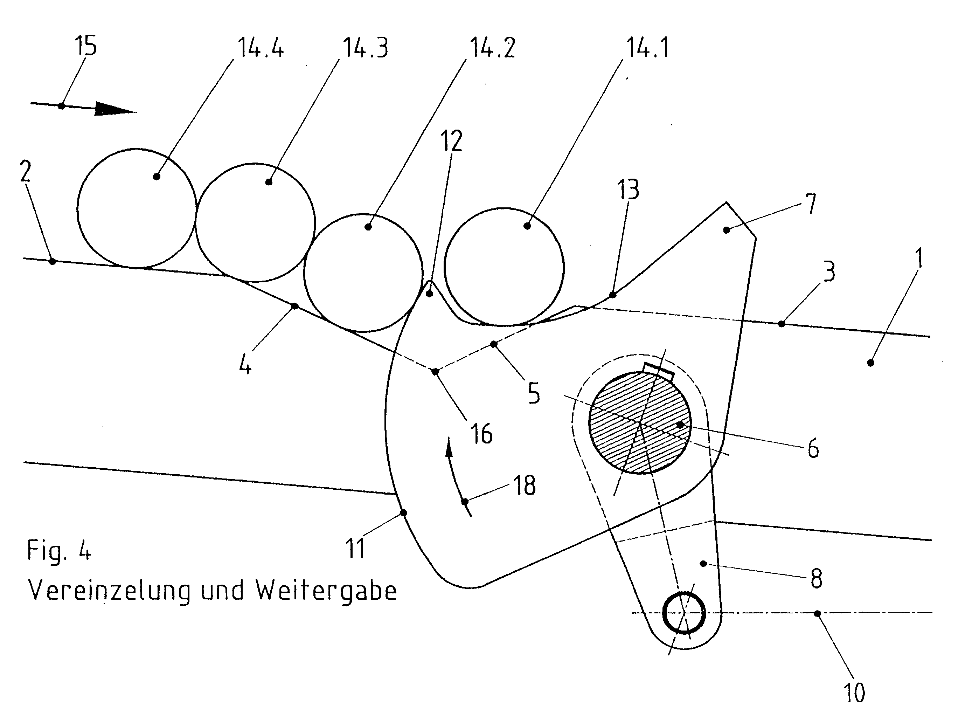

Figur 4 zeigt eine Position, bei der durch Schwenken des Hubhebels 7 in Uhrzeigerrichtung, hier gekennzeichnet durch einen Pfeil 18 im Hubhebel 7, der Greifabschnitt 12 des Hubhebels 7 sich zwischen den ersten 14.1 und zweiten 14.2 Stab geschoben hat und so die Vereinzelung erfolgt ist. Der vereinzelte Stab 14.1 kann beim weiteren Schwenken 18 des Hubhebels 7 entlang des konkav gekrümmten Ablaufabschnittes 13 entlangrollen bzw. entlangrutschen.

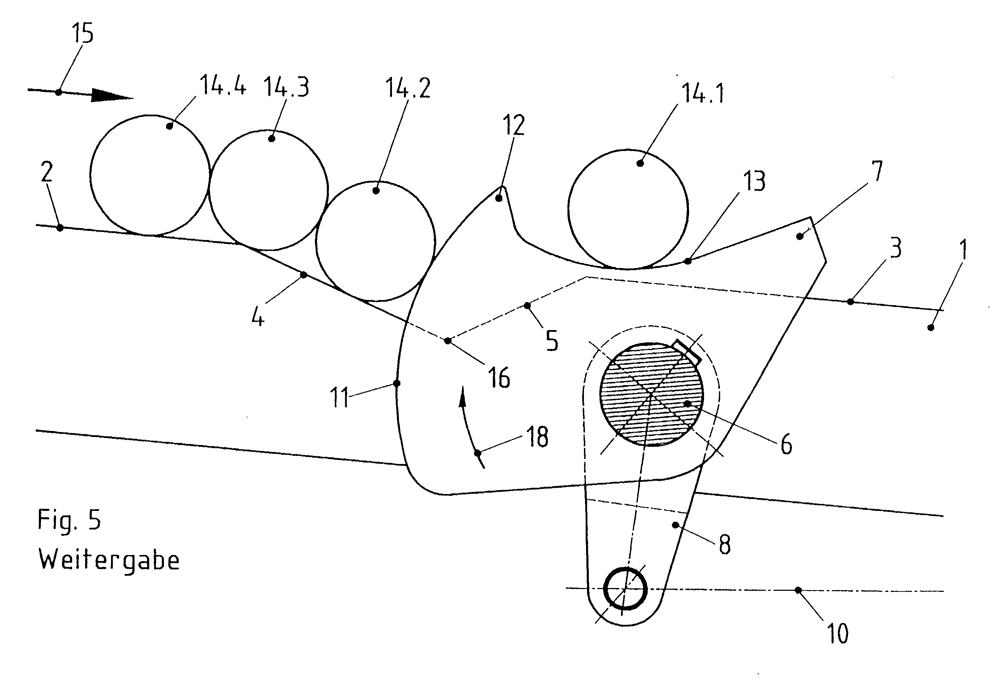

Figur 5 zeigt die Position der Weitergabe des zuvor vereinzelten Stabes 14.1. In dieser Position ist der konvex gekrümmte Rücken 11 des Hubhebels 7 weiter aufwärts geschoben worden, so daß der nächste Stab 14.2 an dem Rücken 11 des Hubhebels 7 zur Anlage kommt und am Weiterrollen bzw. -rutschen gehindert wird.

Die Endstellung zeigt Figur 6, wobei diese der Ausgangsstellung gemäß Figur 1 bzw. der Stopstellung gemäß Figur 2 entspricht. Die nachrutschenden bzw. nachrollenden Stäbe 14.2 - 14.4 sind am Rücken 11 des Hubhebels 7 zur Anlage gekommen. Der Hubhebel 7 ist soweit im Uhrzeigersinn 18 (Figur 5) verschwenkt, daß der Endbereich des Abschnittes 13 mit der Ablaufschräge 3 deckungsgleich liegt. Entlang dieser Ablaufschräge 3 kann der vereinzelte Stab 14.1 abrollen bzw. abrutschen und der nächsten Bearbeitungsstation oder einem Sammelbehälter zugeführt werden. Für die Vereinzelung des nächsten Stabes 14.2 und dessen Weitergabe muß der Hubhebel 7 entgegen dem Uhrzeigersinn in die Position gemäß Figur 3 geschwenkt werden.

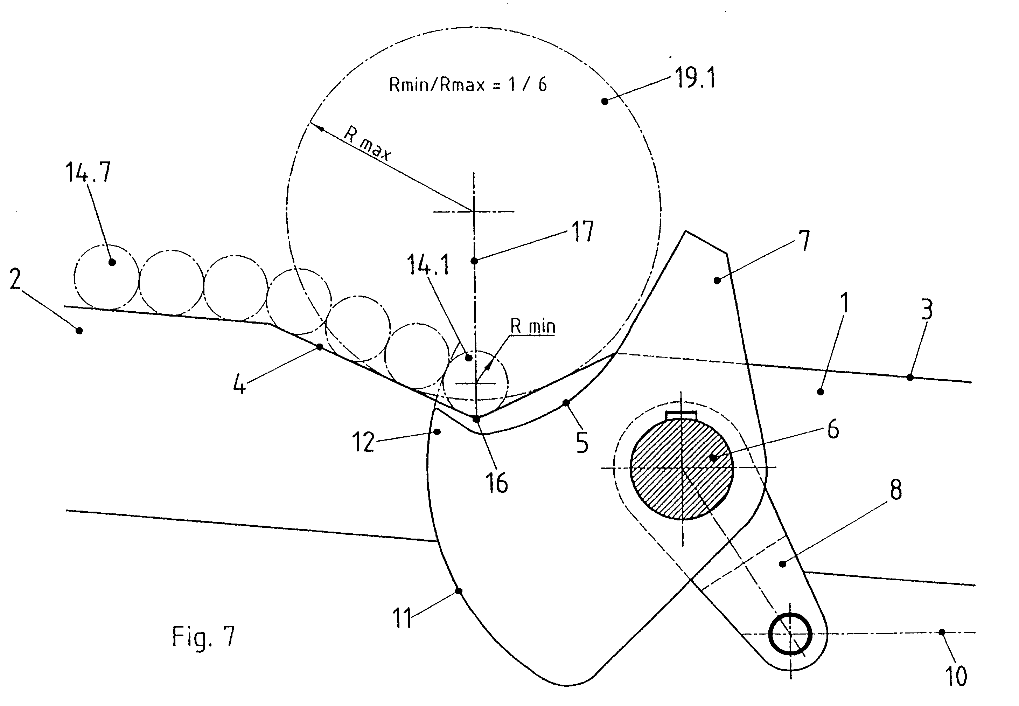

In Figur 7 ist dargestellt, welcher Abmessungsbereich mit einer erfindungsgemäß ausgebildeten Vorrichtung abgedeckt werden kann. Die beiden an der tiefsten Stelle 16 positionierten Stäbe 14.1 bzw. 19.1 zeigen, daß der abzudeckende Abmessungsbereich einem Radienverhältnis von 1:6 entspricht. Dies bedeutet, daß bei einem Radius für den kleinsten zu transportierenden Stab 14.1 von eins mit der erfindungsgemäßen Vorrichtung auch ein Stab 19.1 mit dem sechsfachen Radius bzw. Durchmesser transportiert werden kann. Wichtig dabei ist, daß beim Verschwenken des Hubhebels 7 in die Position gemäß Figur 3 der Greifabschnitt 12 außerhalb der Schwerpunktachse 17 der Stäbe 14.1 bzw. 19.1 liegt.

## Patentansprüche

1. Vorrichtung zum Vereinzeln und zur Weitergabe von Stabmaterial (14.1-14.4) insbesondere von Rohren und Stangen, mit einer Zulaufschräge (2) für die Stäbe (14.1-14.4), einem Element zur Aufnahme eines Stabes in einer Übergabeposition und einer Ablaufschräge (3), einem im Bereich des Elementes angeordneten bewegbaren Förderer zum Vereinzeln und zur Weitergabe der sich in der Übergabeposition befindeten Stäbe (14.1-14.4), wobei der Förderer quer zur Transportrichtung (15) der Vorrichtung mehrere in vorgegebenen Abständen fluchtend angeordnete und auf einem Drehzapfen (6) gelagerte scheibenartig ausgebildete Hubhebel (7) aufweist und die Hubhebel (7) einen Greifabschnitt mit einem spitz zulaufenden Endbereich (12) aufweisen und mit ihren den zugeführten Stäben (14.1-14.4) zugewandten konvex gekrümmten Rücken (11) eine Anlagefläche für die am Rücken (11) auflaufenden Stäbe (14.1-14.4) bilden,
**dadurch gekennzeichnet,**
**daß** das Element aus zwei prismenartig zueinander geneigten
geraden Führungsbahnen (4,5) besteht, an die sich die Zulauf- (2) und die Ablaufschräge (3) anschließen und die Hubhebel (7) auf dem mit den Stäben (14.1-14.4) in Kontakt tretenden Umfangsbereich einen konkav gekrümmten Ablaufabschnitt (13) aufweisen, wobei in Endstellung der Weitergabeposition bzw. Stopstellung des Hubhebels (7) der Endbereich des Ablaufabschnittes (13) kontinuierlich annähernd in die Ablaufschräge (3) übergeht und in Endstellung der Vereinzelungsposition der spitz zulaufende Endbereich des Greifabschnittes (12) in Transportrichtung (15) gesehen vor der Schwerpunktachse (17) des jeweils zu fördernden Stabes (14.1-14.4) und unterhalb des muldenartigen Elementes liegt.

2. Vorrichtung nach Anspruch 1,
**dadurch gekennzeichnet,**
**daß** die Hubhebel (7) mit einem Schwenkhebel (8) fest verbunden sind, an dessen freiem Ende ein Stellmittel angelenkt ist.

3. Vorrichtung nach Anspruch 1 und 2,
**dadurch gekennzeichnet,**
**daß** die Führungsbahnen (4,5) aus einem schalldämmenden Werkstoff hergestellt und an einem den Drehzapfen (6) des Hubhebels (7) aufnehmenden Halteblech (1) angeordnet sind.

4. Vorrichtung nach den Ansprüchen 2 und 3,
**dadurch gekennzeichnet,**
**daß** das Stellmittel eine Kolben-Zylindereinheit ist, die über ein Gelenkauge (9) mit dem Schwenkhebel (8) verbunden ist.

## Claims

1. A device for isolating and passing on bar stock (14.1 - 14.4), in particular tubes and rods, with an approach slope (2) for the bars (14.1 - 14.4), an element for receiving a bar in a transfer position and an exit slope (3), a movable conveyor located in the region of the element for isolating and passing on the bars (14.1 - 14.4) which are in the transfer position, the conveyor transversely to the direction of transport (15) of the device having a plurality of disc-like lifting levers (7) arranged flush and mounted on a trunnion (6) at preset distances, and the lifting levers (7) having a gripping section with a tapering end region (12) and forming with their convex backs (11) facing the supplied bars (14.1 - 14.4) a bearing surface for the bars (14.1 - 14.4) running onto the back (11),
**characterised in that**
the element consists of two straight guide paths (4, 5) inclined towards each other in the form of a prism, which are adjoined by the approach slope (2) and the exit slope (3), and the lifting levers (7) on the peripheral region which comes into contact with the bars (14.1 - 14.4) have a concave exit section (13), wherein in the end position of the passing-on position or stop position of the lifting lever (7) the end region of the exit section (13) merges continuously approximately into the exit slope (3) and in the end position of the isolation position the tapering end region of the gripping section (12), viewed in the direction of transportation (15), lies in front of the neutral axis (17) of the bar (14.1 - 14.4) to be conveyed in each case and beneath the trough-like element.

2. A device according to Claim 1, **characterised in that** the lifting levers (7) are securely connected to a pivoted lever (8), to the free end of which an adjustment means is articulated.

3. A device according to Claims 1 and 2, **characterised in that** the guide paths (4, 5) are made from a silencing material and are arranged on a holding plate (1) which receives the trunnion (6) of the lifting lever (7).

4. A device according to Claims 2 and 3, **characterised in that** the adjustment means is a piston-cylinder unit which is connected to the pivoted lever (8) by means of an articulation eye (9).

## Revendications

1. Dispositif pour séparer et acheminer un matériau en barres (14.1-14.4), en particulier des tubes et des barres, avec une déclivité d'entrée (2) pour les barres (14.1-14.4), un élément pour la réception d'une barre dans une position de transfert, un transporteur mobile disposé dans la zone de l'élément pour séparer et acheminer les barres (14.1-14.4) se trouvant en position de transfert, dans lequel le transporteur comporte, transversalement au sens de transport (15) du dispositif, plusieurs leviers de levage (7) conçus comme des disques alignés à des intervalles prédéterminés et montés sur un tourillon (6) et les leviers de levage (7) comportent une section de prise avec une zone d'extrémité en pointe et, avec leur partie dorsale (11) bombée et convexe en regard des barres amenées (14.1-14.4), forment une surface d'appui pour les barres (14.1-14.4) arrivant au contact de la partie dorsale (11), **caractérisé en ce que** l'élément est constitué de deux glissières de guidages (4, 5) droites, en forme de prisme, inclinées l'une par rapport à l'autre auxquelles sont raccordées la déclivité d'entrée (2) et la déclivité de sortie (3) et les leviers de levage (7) comportent, dans la zone périphérique entrant en contact avec les barres (14.1-14.4), une section de sortie (13) en forme de courbe concave, de sorte que, en position extrême de la position d'acheminement ou de la position d'arrêt du levier de levage (7), la zone d'extrémité de la section de sortie (13) se confond en convergeant en continu avec la déclivité de sortie (3) et, en position extrême de la position de séparation, la zone d'extrémité en pointe de la section de prise (12) se trouve devant l'axe du centre de gravité (17) de chaque barre à transporter (14.1-14.4) et sous l'élément en forme d'auge, vue dans le sens de transport (15).

2. Dispositif selon la revendication 1,
**caractérisé en que** les leviers de levage (7) sont raccordés rigidement à un levier pivotant (8) à l'extrémité duquel est articulé un moyen de réglage.

3. Dispositif selon les revendications 1 et 2,
**caractérisé en que** les glissières de guidage (4, 5) sont faites dans un matériau insonorisant et sont montées sur une tôle de support (1) contenant le tourillon (6) du levier de levage (7).

4. Dispositif selon les revendications 2 et 3,
**caractérisé en que** le moyen de réglage est un ensemble piston-cylindre qui est relié au levier pivotant (8) par un oeillet d'articulation (9).
